(19) Europäisches Patentamt
European Patent Office
Office européen des brevets

(11) **EP 3 519 194 B1**

(12) **EUROPÄISCHE PATENTSCHRIFT**

(45) Veröffentlichungstag und Bekanntmachung des Hinweises auf die Patenterteilung:
26.02.2020 Patentblatt 2020/09

(21) Anmeldenummer: **17771357.5**

(22) Anmeldetag: **07.09.2017**

(51) Int Cl.:
*B32B 27/34* *(2006.01)*     *B32B 5/18* *(2006.01)*
*A01F 25/13* *(2006.01)*     *B32B 7/06* *(2019.01)*
*B32B 27/06* *(2006.01)*     *B32B 27/08* *(2006.01)*
*B32B 27/18* *(2006.01)*     *B32B 27/30* *(2006.01)*
*B32B 27/32* *(2006.01)*     *B32B 27/36* *(2006.01)*

(86) Internationale Anmeldenummer:
**PCT/EP2017/072482**

(87) Internationale Veröffentlichungsnummer:
**WO 2018/059903 (05.04.2018 Gazette 2018/14)**

(54) **ABDECKSYSTEM ZUR SILAGEBEREITUNG**

COVERING SYSTEM FOR SILAGE PREPARATION

SYSTÈME DE RECOUVREMENT POUR LA PRÉPARATION D'ENSILAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **29.09.2016 DE 102016118551**

(43) Veröffentlichungstag der Anmeldung:
**07.08.2019 Patentblatt 2019/32**

(73) Patentinhaber: **RKW AGRI GMBH & CO. KG**
**67227 Frankenthal (DE)**

(72) Erfinder: **CHERET, Estelle**
**2920 Kalmthout (BE)**

(74) Vertreter: **Busch, Tobias**
**Anwaltskanzlei Busch & Kollegen**
**Schlossergasse 4**
**67227 Frankenthal (DE)**

(56) Entgegenhaltungen:
**EP-A1- 3 009 263**     **DE-A1-102009 052 948**

**Beschreibung**

Die Erfindung betrifft ein Abdecksystem zur Silagebereitung, das mindestens eine Unterziehfolie umfasst, die sich an die Oberfläche eines Futtermittels anschmiegt.

Silage ist ein durch Milchsäuregärung konserviertes Futtermittel für Nutztiere, vor allem für Wiederkäuer. Es werden aber auch nachwachsende Rohstoffe, die als Energiequelle in Biogasanlagen dienen, durch Silierung haltbar gemacht. Siliert werden können grundsätzlich alle Grünfuttermittel, unter anderem Gras (Grassilage), Mais (Maissilage), Klee oder auch Getreide (als Ganzpflanzensilage).

Man unterscheidet drei Grundformen zur Erzeugung und Lagerung von Silage: Das heute selten anzutreffende Hochsilo, das Flachsilo (Freigärhaufen oder Fahrsilo) und das Ballen- oder Schlauchsilo.

Die mengenmäßig bedeutendste und kostengünstigste Art der Silagebereitung besteht darin Grünfutter, welches auf dem Boden zu Haufwerken aufgeschüttet wird, durch Folien abzudecken. Hier wird wiederum nach Fahrsilos, welche zum Boden und an den seitlichen Wänden durch Betonwandungen eingefasst werden und Freigärhaufen, welche keine konstruktiven seitlichen Begrenzungswände aufweisen, unterschieden. Solche Flachsilos, also Freigärhaufen oder Fahrsilos, werden auch als Haufwerksilos bezeichnet. Herkömmlicherweise wurden stabile Folien auf Basis von Polyethylen zur Abdeckung von Haufwerksilos verwendet. Allerdings kam es bei der Verwendung dieser herkömmlichen Folien immer wieder zu Schimmelbildungen, aufgrund des Eindringens von Sauerstoff.

In der EP 1 035 762 B1 wird eine Kunststofffolie beschrieben, die aus einem isolierenden luft- und insbesondere sauerstoffdichten Kunststoffmaterial besteht. Die Folie umfasst mindestens eine Schicht aus einem Polyamid.

Die EP 2 286 658 B1 beschreibt eine Silofolie, die zumindest eine Schicht aus einer Harzzusammensetzungsschicht aufweist, die ein verseiftes Copolymer auf Ethylenvinylacetatbasis mit einem Ethylengehalt von 20 - 60 mol-% und ein verseiftes Copolymer auf Ethylenvinylacetatbasis mit einem Ethylengehalt von 70 bis 98 % aufweist.

Nach neuerem Stand der Technik wird mit mehreren Folien zur Abdeckung von Haufwerksilos gearbeitet. Dabei werden zur Silierung in der Praxis zwei Folien unterschiedlicher Dicken übereinander angeordnet. Die untere Folie, welche direkt auf dem Futtermittel angeordnet wird, wird als Unterziehfolie bezeichnet. Die dünne Unterziehfolie "saugt" sich quasi dem frisch silierten Futter an, weshalb diese Folie auch als "Saugfolie", "Siegelfolie" oder "Dichtungsfolie" bezeichnet wird. Je enger sich die Folie dem Futterstock anpasst, desto weniger Sauerstoff verbleibt nach dem Abdecken im Silo bzw. desto weniger Sauerstoff kann bei der Entnahme in den Futterstock eindringen. Durch die Verwendung einer Unterziehfolie, die sich an das Futtermittel anschmiegt, wird Schimmelbildung und das unerwünschte Wachstum von Hefepilzen verhindert.

Es sind Abdecksysteme bekannt, bei denen über diese dünne Unterziehfolie eine dickere Silofolie platziert wird. Die Dicken üblicherweise verwendeter Unterziehfolien betragen dabei etwa 40 $\mu$m, während üblicherweise verwendete Silofolien Dicken im Bereich 120 - 200 $\mu$m aufweisen. Silofolien haben die Aufgabe, die Unterziehfolie vor UV-Licht und mechanischer Belastung zu schützen.

Bei diesen üblichen Systemen mit mehreren Folien besteht die Unterziehfolie in der Regel aus einer polyolefinischen Folie. Auch bei der Silofolie handelt es sich üblicherweise um eine polyolefinische Folie, die jedoch eine größere Stärke gegenüber der Unterziehfolie aufweist.

Die DE 10 2009 0252 948 B4 beschreibt ein Abdecksystem mit einer Unterziehfolie aus einem Polyamid und einer Silofolie aus einem Polyethylen. Die dünne Unterziehfolie aus dem Polyamid schmiegt sich an die Oberfläche des Futtermittelhaufwerks an und wirkt somit als wirksame Sauerstoffbarriere, die eine Schimmelbildung wirksam verhindert.

In der EP 3 009 263 A1 wird eine Stretchfolie zum Umhüllen von Material beschrieben. Die Stretchfolie umfasst eine Sperrschicht, die zwischen zwei Polyolefinschichten angeordnet ist. Die Folie weist eine geringe Durchlässigkeit für Sauerstoff und Wasserdampf auf.

Die bei der Gärung entstehende Milchsäure kann die Unterziehfolie angreifen.

Dies kann zu einer Schädigung des Polymers und somit zu einer verringerten Lebensdauer bzw. zu Undichtigkeiten führen.

Aufgabe der Erfindung ist es, ein Abdecksystem zur Silagebereitung bereitzustellen, das Schimmelbildung sowie das Wachstum von Hefepilzen wirksam verhindert. Dazu soll sich das Abdecksystem durch eine gute mechanische Haltbarkeit auszeichnen und soll Sicherheit gegen Schäden durch Vögel, Hagelschlag und dergleichen bieten. Zudem soll sich das Abdecksystem im Zuge einer nachhaltigen Entwicklung durch eine gute Recycelbarkeit und eine hohe Ressourceneffizienz auszeichnen.

Diese Aufgabe wird erfindungsgemäß dadurch gelöst, dass die Unterziehfolie eine innere, der Silage zugewandte Schutzschicht aufweist, welche die Sauerstoffbarriereschicht vor den Einwirkungen der bei der Silage entstehenden Substanzen, insbesondere der Einwirkung von Milchsäure, schützt. Die Aufgabe wird erfindungsgemäss mit einem Abdecksystem wie in Anspruch 1 definiert gelöst. Weitere Ausführungsformen sind in den abhängigen Ansprüchen festgelegt. Ein erfindungsgemässes Verfahren zur Silagebereiteung ist in Anspruch 20 definiert, und in Anspruch 21 ist die Verwendung des Abdecksystems definiert.

Vorzugsweise besteht die Schutzschicht der Unterziehfolie zu wenigstens 50 Gew.-% aus Materialien der Gruppe umfassend Polyethylen, Polypropylen, Ethylenvinylacetat (EVA), Ethylenbutylacrylat (EBA), Copolymerisaten aus Ethylen und anderen Vinylmonomeren sowie Copolymerisaten aus Propylen und anderen Vinylmonomeren.

Durch eine geschickte Kombination einer Sauerstoffbarriereschicht, die vorzugsweise aus einem Polyamid besteht mit einer Schutzschicht, die vorzugsweise aus einem Polyethylen besteht, wird eine ausreichend flexible und dennoch stabile Unterziehfolie geschaffen, die sich an die Oberfläche des Futtermittelhaufwerks ansaugt und somit die Bildung von Hohlräumen verhindert, gleichzeitig als Sauerstoffbarriere wirkt und zusätzlich eine hohe Resistenz gegenüber Milchsäure aufweist.

Die Dicke der Unterziehfolie beträgt höchstens 60 μm, vorzugsweise höchstens 50 μm, insbesondere höchstens 40 μm. Die dünne Ausführung der Unterziehfolie, welche erfindungsgemäß eine äußerst wirksame Sauerstoffbarriereschicht umfasst, die mit einer Schutzschicht kombiniert ist, gewährleistet ein wirksames Ansaugen der Unterziehfolie und gleichzeitig eine effiziente Sauerstoffbarriere, die vor der Einwirkung durch Milchsäure geschützt ist.

Um Beschädigungen der Unterziehfolie, beispielsweise durch mechanische Einflüsse zu vermeiden, hat es sich zudem als besonders günstig erwiesen, wenn die Unterziehfolie eine Dicke von mindestens 10 μm, vorzugsweise mindestens 15 μm, insbesondere mindestens 20 μm aufweist.

Die Sauerstoffbarriereschicht ist mindestens um den Faktor 1,2, vorzugsweise mindestens um den Faktor 1,4, insbesondere mindestens um den Faktor 1,6 dicker als die Schutzschicht, wobei es sich als besonderes günstig erweist, wenn die Sauerstoffbarriereschicht mindestens um den Faktor 1,8 dicker ist als die Schutzschicht. Durch dieses günstige Verhältnis der Stärke der Sauerstoffbarriereschicht zur Stärke der Schutzschicht wird eine Unterziehfolie geschaffen, die zwar flexibel genug ist, damit sie sich an die Silage anschmiegt, gleichzeitig eine hohe Undurchlässigkeit gegenüber Sauerstoff aufweist und zusätzlich wirksam gegen Einflüsse von Milchsäure der Silage geschützt ist. Bei einer Variante der Erfindung beträgt das Verhältnis der Dicke der Sauerstoffbarriereschicht zur Dicke der Schutzschicht 2:1. So hat sich beispielsweise eine Unterziehfolie als vorteilhaft erwiesen, die eine Sauerstoffbarriereschicht aus Polyamid mit einer Dicke von 20 μm und eine Schutzschicht aus Polyethylen von 10 μm aufweist.

Die Sauerstoffdurchlässigkeit der mehrschichtigen Unterziehfolie beträgt nach DIN 53380-3 bei 23° und 50 % relativer Feuchte höchstens

$$500 \; \frac{cm^3}{m^2 \cdot d \cdot bar} \; , \qquad \text{vorzugsweise höchstens}$$

$$300 \; \frac{cm^3}{m^2 \cdot d \cdot bar} , \qquad \text{insbesondere maximal}$$

$$200 \; \frac{cm^3}{m^2 \cdot d \cdot bar} .$$ Diese Wasserdurchlässigkeit wird im Rahmen der vorliegenden Erfindung nach DIN 53380-3 bei 23°C und 50 % relativer Feuchte bestimmt. Bei einer besonders vorteilhaften Variante weist die Unterziehfolie eine Sauerstoffdurchlässigkeit von höchstens

$$100 \; \frac{cm^3}{m^2 \cdot d \cdot bar} \; \text{auf.}$$

Vorzugsweise wird die erfindungsmäße Kombination der Sauerstoffbarriereschicht mit der Schutzschicht bei der Unterziehfolie so geschickt gewählt, dass neben einer möglichst geringen Sauerstoffdurchlässigkeit gleichzeitig eine möglichst hohe Wasserdampfdurchlässigkeit gewährt wird. Die Wasserdampfdurchlässigkeit der Unterziehfolie beträgt nach ISO 15106-3 bei 23°C und 85 % relativer Luftfeuchte wenigstens

$$5 \; \frac{g}{m^2 \cdot d}, \; \text{vorzugsweise wenigstens} \; 10 \; \frac{g}{m^2 \cdot d}, \; \text{insbe-}$$

sondere wenigstens $15 \; \frac{g}{m^2 \cdot d}.$ Dadurch wird erreicht, dass die Feuchtigkeit aus dem Futterstock durch die Unterziehfolie hindurchdiffundieren kann und sich somit ein Feuchtigkeitsgleichgewicht zwischen Futterstock und Unterziehfolie einstellt. Durch dieses Hindurchdiffundieren von Feuchtigkeit durch die Unterziehfolie kann sich ein dünner Feuchtigkeitsfilm zwischen Unterziehfolie und einer Silofolie bilden, der zu einer Trennung von der Unterziehfolie von der Silofolie beiträgt. Dagegen ist bei herkömmlichen Unterziehfolien ein Durchdiffundieren der Feuchtigkeit durch die Unterziehfolie weitgehend ausgeschlossen, sodass sich die Feuchtigkeit des Films zur Unterziehfolie sammelt und nicht durch die Unterziehfolie hindurchtreten kann. Dagegen tritt bei der erfindungsgemäßen Folie ein Teil der Feuchtigkeit durch die Unterziehfolie hindurch und sammelt sich als Film zwischen der Unterziehfolie und der Silofolie, sodass eine Trennung der beiden Folien dadurch bewirkt wird und sich somit die Unterziehfolie an die Oberfläche des Futtermittelstocks ansaugen kann.

Bei einer besonders vorteilhaften Ausführung der Erfindung umfasst das Abdecksystem neben der erfindungsgemäßen Unterziehfolie eine Silofolie. Die Silofolie ist vorzugsweise deutlich dicker als die Unterziehfolie und hat die Aufgabe, die Unterziehfolie vor mechanischer Belastung und gegebenenfalls auch UV-Licht zu schützen.

Bei einer Variante der Erfindung bilden die erfindungsgemäße Unterziehfolie und die Silofolie eine Einheit zur Abdeckung des Futtermittelhaufwerks in einem Arbeitsgang. Diese Einheit wird vorzugsweise dadurch gebildet, dass die Unterziehfolie und die Silofolie miteinander aufgerollt bzw. miteinander gefaltet sind, sodass ein gemeinsames Entrollen bzw. Auffalten in einem Arbeitsgang möglich ist. Durch diese Kombination einer Silofolie mit einer Unterziehfolie wird eine wirksame Sauerstoffbarriere geschaffen, die sich in nur einem Arbeitsgang auf das Silo aufbringen lässt. Die an der Silofolie anhaftende Unterziehfolie löst sich dann nach Gebrauch in relativ kurzer Zeit selbständig von der Silofolie ab und saugt sich an die Silage an, sodass die Silage wirksam gegen Eindringen von Sauerstoff versiegelt wird. Daher wird die Unterziehfolie auch als Siegelfolie bezeichnet. Nach dem Auslegen mit einsetzendem Gärprozess nimmt die Unterziehfolie Feuchtigkeit aus dem Silogut auf. Dabei erhöhen sich ihre Festigkeit, Durchstoßfestigkeit und Dehnung bedeutend. Die erfindungsgemäße Wasserdampfdurchlässigkeit der Unterziehfolie forciert die Trennung der Unterziehfolie von der Silofolie von der Silofolie. Der Wasserdampf aus der Silage diffundiert durch die Unterziehfolie und kondensiert an der Silofolie, die den Wasserdampf sperrt. Nach einigen Tagen ist die Trennung der Folienkombination perfekt. Die Unterziehfolie schmiegt sich an die Oberfläche der Silage an. So lassen sich Feuchtigkeitsnester und das damit verbundene Schimmelrisiko wirkungsvoll vermeiden.

Die erfindungsgemäße Einheit aus einer Unterziehfolie mit einer Silofolie wird dabei so kombiniert, dass nach dem Ausbringen dieser Einheit in einem Arbeitsschritt die Unterziehfolie sich von der Silofolie trennt und dann an die Oberfläche des Haufwerks anschmiegt.

Bei einer Variante der Erfindung liegt innerhalb der Unterziehfolie die Schutzschicht getrennt von der Sauerstoffbarriereschicht vor. Dabei kann Unterziehfolie bereits von vornherein aus zwei getrennten Schichten bestehen oder die Trennung der Schutzschicht von der Sauerstoffbarriereschicht findet erst nach dem Ausbringen des Abdecksystems statt. Die Schutzschicht löst sich in diesem Fall dann erst nach dem Ausbringen des Abdecksystems selbständig von der Sauerstoffbarriereschicht ab. Bei einer Variante der Erfindung saugt sich die Schutzschicht an die Silage an. Durch die Sauerstoffbarriereschicht wird die Silage wirksam gegen Eindringen von Sauerstoff versiegelt.

Vorzugsweise weist die Silofolie des Abdecksystems eine niedrigere Wasserdampfdurchlässigkeit als die Unterziehfolie auf. Dabei erweist es sich als günstig, wenn die Wasserdampfdurchlässigkeit der Silofolie nach ISO 15106-3 bei 23°C und 85 % relative Luftfeuchte höchstens $3{,}0 \ \frac{g}{m^2 \cdot d}$, vorzugsweise $2{,}5 \ \frac{g}{m^2 \cdot d}$, insbesondere $2{,}0 \ \frac{g}{m^2 \cdot d}$ beträgt. Dadurch kann sich der Wasserdampf, der aus der Silage durch die Unterziehfolie diffundiert, an der Silofolie sammeln, die den Wasserdampf erfindungsgemäß sperrt. Dadurch verbessert sich die Trennung der Unterziehfolie von der Silofolie, sodass sich die Silofolie perfekt an den Futterstock ansaugen kann und somit eine anhaftende Siegelfolie bildet.

Vorzugsweise weist die Unterziehfolie in der Sauerstoffbarriereschicht neben Materialien aus der Gruppe umfassend Polyamid, Copolyamid, Polyester, Copolyester, Polyethylenvinylalkohol, Polyvinylalkohol und Mischungen davon höchstens 20 Gew.-% polymere Bestandteile auf, bevorzugt keine weiteren polymeren Bestandteile.

Bei einer besonders vorteilhaften Variante besteht die Sauerstoffbarriereschicht der Unterziehfolie aus Polyamiden und Copolyamiden, bevorzugt Mischungen aus PA 6, PA 6/66, PA66, PA 6I6T und/oder anderen aliphatischen, aromatischen oder teilaromatischen Polyamiden oder Copolyamiden. Vorzugsweise enthält die Sauerstoffbarriereschicht wenigstens 50 %, bevorzugt wenigstens 70 % und noch weiter bevorzugt wenigstens 90 % einer oder mehreren Materialien aus der Gruppe umfassend Polyamid und Copolyamid, bevorzugt PA6, PA66, PA 6/66, PA 6I6T und/oder anderer aliphatische, aromatische oder teilaromatische Polyamide oder Copolyamide.

Die Unterziehfolie besteht erfindungsgemäß zumindest aus einer Sauerstoffbarriereschicht und einer Schutzschicht. Die Unterziehfolie kann in einer, mehrerer oder allen Schichten Additive aufweisen, zum Beispiel zur Erhöhung der Stabilität gegen UV-Strahlung und/oder Gleitmittel und/oder mineralische Antiblock-Additive zur Verringerung der Reibungskoeffizienten der Folienoberfläche und/oder Additive zur Einfärbung.

Es hat sich als vorteilhaft erwiesen, das Abdecksystem mit einem höheren Wasseranteil in der Unterziehfolie zu verlegen als er nach der Extrusion der Folie enthalten ist. Bevorzugt ist ein Feuchtegehalt von 2 Gew.-% oder mehr, bezogen auf die in der Unterziehfolie enthaltenen Materialien aus der Gruppe umfassend Polyamid, Copolyamid, Polyester, Copolyester, EVOH und PVOH. Der Wassergehalt kann zum Beispiel über Sprühdosen oder ein Wasserbad bei der Produktion eingebracht werden.

Die Silofolie enthält vorzugsweise Polyethylen niederer Dichte (LDPE), Polyethylen mittlerer Dichte (MDPE), Polyethylen hoher Dichte (HDPE), Copolymerisaten aus Ethylen und $\alpha$-Olefinen (LLDPE), Copolymerisaten aus Ethylen und Vinylacetat (EVA), Copolymerisaten aus Ethylen und ethylenisch ungesättigten Säuren oder Estern, insbesondere Acrylsäure, Metacrylsäure und deren Estern (Ethylmethylacrylat EMA), Ethylenethylacrylat (EEA), Ethylenbutylacrylat (EBA), Polypropylen (PP), heterophasischen (Block-Co-PP) oder homogenen (Random-Co-PP) Copolymerisaten aus Polyethylen und Ethylen. Es ist vorteilhaft, wenn keine weiteren polymeren Bestandteile außer Materialien aus der Gruppe umfassend Polyethylen, Polypropylen, Copolymerisate aus Ethylen und anderen Vinylmonomeren sowie Copolymerisate aus Propylen und anderen Vinylmonomeren enthalten sind. Unter Vinylmonomeren sollen solche mit einer Ethylengruppe verstanden werden, die mit Ethylen copolymerisierbar sind. Hierzu zählen vor allem, aber nicht ausschließlich, $\alpha$-Olefine mit zwei bis 12 Kohlenstoffatomen - zum Beispiel Ethylen, Propylen, Buten, Penten, Hexen, Okten-, Acrylsäure und deren Ester, Methacrylsäure und deren Ester, Styrol, Diene - zum Beispiel Butadien, Isopren -, Vinylacetat, Cycloolefine - zum Beispiel Norbornen, Cyclopentadien- und Kohlenmonoxid.

Die Silofolie kann mineralische Füllstoffe wie beispielsweise, aber nicht ausschließlich, Calciumcarbonat oder Talkum zur Erhöhung der Steifigkeit enthalten.

Die Silofolie kann Additive in üblichen Mengen enthalten, zum Beispiel UV-Stabilisatoren und/oder Gleitmittel und/oder mineralische Antiblockadditive zur Verringerung der Reibungskoeffizienten der Folienoberfläche und/oder Additive zur Einfärbung der Folie.

Die Silofolie weist bevorzugt eine Dicke zwischen 50 μm und 200 μm, besonders bevorzugt zwischen 50 μm und 150 μm und insbesondere bevorzugt zwischen 60 und 120 μm auf.

Als besonders günstig hat es sich erwiesen, wenn bei dem erfindungsgemäßen Abdecksystem die Unterziehfolie und die Silofolie gemeinsam durch Coextrusion hergestellt sind. Dabei erweist es sich als besonders vorteilhaft, wenn die Unterziehfolie und die Silofolie bei der Coextrusion mit einer geringen Verbundhaftung hergestellt sind, zum Trennen der Unterziehfolie von der Silofolie. Durch diese Coextrusion mit geringer Verbundhaftung wird ein Abdecksystem geschaffen, bei der sich die Unterziehfolie von der Silofolie nach dem Ausbringen in einem Arbeitsgang trennen kann. Das Abdecksystem ist dabei eine vorkonfektionierte Einheit, wobei bei dieser vorkonfektionierten Einheit die Unterziehfolie mit der Silofolie miteinander aufgerollt und/oder gefaltet ist und dadurch in einem Arbeitsgang durch gemeinsames Entrollen und/oder Entfalten auf das Haufwerksilo aufgebracht werden kann.

In einer bevorzugten Ausführungsform besteht zumindest eine Lage des Abdecksystems aus einer extrudierten ein- oder mehrschichtigen Kunststofffolie mit wenigstens einer Schicht, die eine Schaumstruktur enthält. Dies ist besonders für die Separierung der Unterziehfolie von der Silofolie bei dem durch Coextrusion mit geringer Verbundhaftung hergestellten Abdecksystem günstig.

Das entrollte Abdecksystem weist vorzugsweise eine rechteckige Form auf.

Die Breite des Abdecksystems beträgt vorzugsweise mindestens 3 m, besonders bevorzugt mindestens 4 m, insbesondere mindestens 5 m und/oder höchstens 21 m, besonders bevorzugt höchstens 20 m, insbesondere höchstens 19 m.

Die Länge des Abdecksystems beträgt vorzugsweise mindestens 20 m, besonders bevorzugt mindestens 30 m, insbesondere mindestens 40 m.

Im Folgenden wird die Erfindung anhand von Beispielen erläutert, ohne jedoch auf die speziell beschriebenen Ausführungsformen beschränkt zu sein. Soweit nicht anders angegeben beziehen sich die Prozentangaben auf das Gewicht, im Zweifel auf das Gesamtgewicht der Mischung. Die Erfindung bezieht sich auch auf sämtliche Kombinationen der zweckmäßigen, günstigen und bevorzugten Ausgestaltungen soweit diese sich nicht gegenseitig ausschließen. Die Angaben "etwa" oder "circa" in Verbindung mit einer Zahlenangabe bedeuten, dass zumindest um 10 % höhere oder niedrigere Werte oder um 5 % höhere oder niedrigere Werte und in jedem Fall um 1 % höhere oder niedere Werte eingeschlossen sind.

Dabei zeigen die folgenden Figuren:

Figur 1 eine schematische Schnittdarstellung durch das erfindungsgemäße Abdecksystem,

Figur 2 das Abdecksystem unmittelbar nach dem Aufbringen auf dem Futterstock,

Figur 3 das Ablösen der Unterziehfolie von der Silofolie.

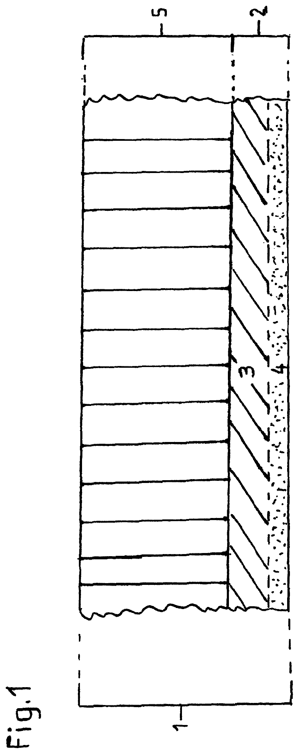

Figur 1 zeigt ein Abdecksystem 1 zur Silagebereitung. Das Abdecksystem 1 umfasst eine Unterziehfolie 2. Die Unterziehfolie weist eine Sauerstoffbarriereschicht 3 und eine Schutzschicht 4 auf.

Im Ausführungsbeispiel beträgt die Dicke der Unterziehfolie 2 ca. 30 μm, wobei die Sauerstoffbarriereschicht 3 eine Dicke von 20 μm aufweist und die Schutzschicht 4 eine Dicke von 10 μm aufweist. Die Sauerstoffbarriereschicht 3 ist somit um den Faktor 2 dicker als die Schutzschicht 4.

Die dünne Unterziehfolie 2 saugt sich durch Adhäsion dem frisch silierten Futter an. Durch dieses Anschmiegen wird die Bildung von Hohlräumen verhindert.

Ergänzend zur Trennung der Unterziehfolie 2 von der Silofolie 5 kann es auch innerhalb der Unterziehfolie 2 zu einer Trennung der Sauerstoffbarriereschicht 3 und Schutzschicht 4 kommen. Diese Variante ist in den Figuren nicht dargestellt.

Im Ausführungsbeispiel besteht die Sauerstoffbarriereschicht 3 aus mindestens 80 % PA 6/66.

Erfindungsgemäß wird bei der Unterziehfolie 2 die Sauerstoffbarriereschicht 3 mit einer Schutzschicht 4 kombiniert. Die Schutzschicht 4 besteht zu wenigstens 50 %, vorzugsweise wenigstens 70 %, insbesondere wenigstens 90 % aus Materialien der Gruppe umfassend Polyethylen, Polypropylen, Ethylenvinylacetat (EVA), Ethylenbutylacrylat (EBA), Copolymerisaten aus Ethylen und anderen Vinylmonomeren sowie Copolymerisaten aus Propylen und anderen Vinylmonomeren. Diese pololefinische Schutzschicht 4 bewahrt die Sauerstoffbarriereschicht 3 vor der Einwirkung durch Milchsäure, die bei der Gärung der Silage entsteht. Dadurch wird eine Unterziehfolie 2 geschaffen, die aufgrund ihrer geringen Dicke von nur 30 μm sich an die Oberfläche des Futtermittels ansaugt und so anschmiegt, dass die Oberfläche des Mittels gegen Eindringen in den Sauerstoff versiegelt wird und gleichzeitig die Bildung von Flüssigkeitsnestern wirksam verhindert wird, sodass keine Schimmelbildung auftritt. Gleichzeitig wird durch die dünne Beschichtung der Sauerstoffbarriereschicht 3, die vorzugsweise aus einem Polyamid besteht mit einer Schutzschicht 4, die vorzugsweise aus einem Polyolefin besteht eine hohe Haltbarkeit und lange Lebensdauer der Unterziehfolie 2 gewährleistet. Dadurch wird für die Dauer des gesamten Gärprozesses eine sauerstoffdichte Silageabdeckung erzielt.

Im Ausführungsbeispiel gemäß der Darstellung in Figur 1 besteht die Sauerstoffbarriereschicht 4 aus einem Polyethylen.

Das in Figur 1 dargestellte erfindungsgemäße Abdecksystem 1 umfasst neben der Unterziehfolie 2 eine Silofolie 5. Zur Herstellung des Abdecksystems 1 wurde die Silofolie 5 durch Coextrusion mit der Unterziehfolie 2 hergestellt. Erfindungsgemäß bilden Unterziehfolie 2 und Silofolie 5 eine kombinierte Einheit zur Abdeckung des Futtermittelhaufwerks in einem Arbeitsgang.

Die Silofolie 5 weist im Ausführungsbeispiel eine Dicke von 80 $\mu$m auf. Gemeinsam mit der Unterziehfolie 2 beträgt somit die Dicke des Abdecksystems 1 ca. 110 $\mu$m.

Die Silofolie 5 besteht zu wenigstens 70 Gew.-% aus einem Polyethylen.

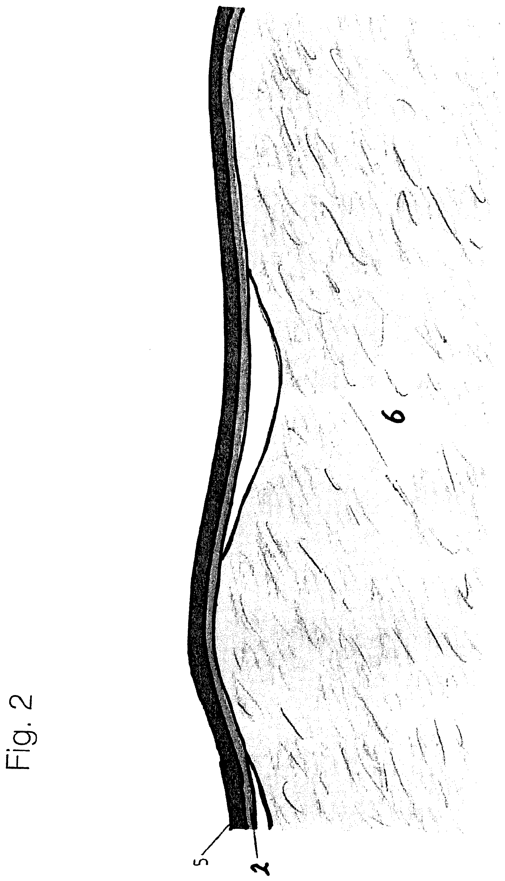

Figur 2 zeigt das Abdecksystem 1 unmittelbar nachdem es auf ein Futtermittelhaufwerk 6 aufgebracht wurde. Die Unterziehfolie 2 haftet an der Silofolie 5.

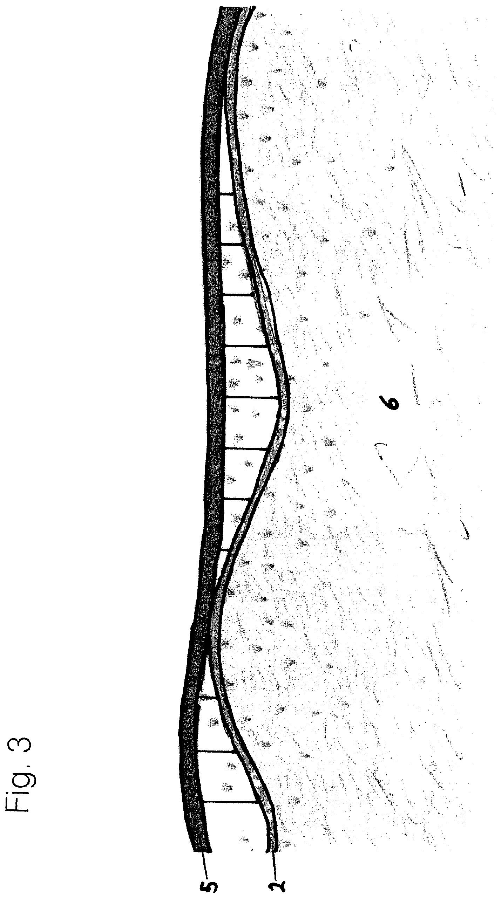

Figur 3 zeigt dann eine Situation, bei der sich die Unterziehfolie 2 von der Silofolie 5 abgelöst hat und sich an die Oberfläche des Futtermittelhaufwerks 6 angeschmiegt hat.

**Patentansprüche**

1. Abdecksystem (1) zur Silagebereitung umfassend mindestens eine Unterziehfolie (2) zum Anschmiegen an die Oberfläche eines Futtermittels (6), wobei die Unterziehfolie (2) mindestens eine Sauerstoffbarriereschicht (3) aufweist, die zu wenigstens 50 Gew.-% aus Materialien der Gruppe umfassend Polyamid, Copolyamid, Polyester, Copolyester, Polyethylenvinylalkohol, Polyvinylalkohol und/oder Mischungen davon besteht, **dadurch gekennzeichnet, dass** die Unterziehfolie (2) mindestens eine innere, der Silage zugewandte Schutzschicht (4) zum Schutz der Sauerstoffbarriereschicht (3) vor Substanzen der Silage aufweist, wobei die Unterziehfolie (2) eine Dicke von höchstens 60 $\mu$m aufweist und die Sauerstoffbarriereschicht (3) mindestens um den Faktor 1,2 dicker ist als die Schutzschicht (4).

2. Abdecksystem nach Anspruch 1, **dadurch gekennzeichnet, dass** die Schutzschicht (4) zu wenigstens 50 Gew.-%, vorzugsweise zu wenigstens 70 Gew.-%, insbesondere zu wenigstens 90 Gew.-% aus Materialien der Gruppe umfassend Polyethylen, Polypropylen, Copolymerisaten aus Ethylen mit anderen Vinylmonomeren sowie Copolymerisaten aus Propylen mit anderen Vinylmonomeren, Ethylenvinylacetat (EVA) oder Ethylenbutylacrylat (EBA) besteht.

3. Abdecksystem nach Anspruch 1 oder 2, **dadurch gekennzeichnet, dass** die Unterziehfolie (2) eine Dicke von höchstens 50 $\mu$m, insbesondere höchstens 40 $\mu$m und/oder mindestens 10 $\mu$m, vorzugsweise mindestens 15 $\mu$m, insbesondere mindestens 20 $\mu$m aufweist.

4. Abdecksystem nach einem der Ansprüche 1 bis 3, **dadurch gekennzeichnet, dass** die Sauerstoffbarriereschicht (3) mindestens um den Faktor 1,4, insbesondere mindestens um den Faktor 1,6 dicker ist als die Schutzschicht (4).

5. Abdecksystem nach einem der Ansprüche 1 bis 4, **dadurch gekennzeichnet, dass** die Unterziehfolie (2) eine Sauerstoffdurchlässigkeit nach DIN 53380-3 bei 23°C und 50 % relativer Feuchte von höchstens $500 \ \frac{cm^3}{m^2 \cdot d \cdot bar}$, vorzugsweise höchstens

$300 \ \frac{cm^3}{m^2 \cdot d \cdot bar}$, insbesondere $200 \ \frac{cm^3}{m^2 \cdot d \cdot bar}$ aufweist.

6. Abdecksystem nach einem der Ansprüche 1 bis 5, **dadurch gekennzeichnet, dass** die Unterziehfolie (2) eine Wasserdampfdurchlässigkeit nach ISO 15106-3 bei 23°C und 85 % relativer Feuchte von wenigstens $5 \ \frac{g}{m^2 \cdot d}$, vorzugsweise wenigstens

$10 \ \frac{g}{m^2 \cdot d}$, insbesondere wenigstens $15 \ \frac{g}{m^2 \cdot d}$ aufweist.

7. Abdecksystem nach einem der Ansprüche 1 bis 6, **dadurch gekennzeichnet, dass** die Unterziehfolie (2) wenigstens einer Schicht (3) neben Materialien aus der Gruppe umfassend Polyamid, Copolyamid, Polyester, Copolyester, Polyethylenvinylalkohol, Polyvinylalkohol und Mischungen davon höchstens 20 Gew.-% weitere polymere Bestandteile, vorzugsweise höchstens 10 .Gew.-%, insbesondere keine weiteren polymeren Bestandteile enthält.

8. Abdecksystem nach einem der Ansprüche 1 bis 7, **dadurch gekennzeichnet, dass** die Sauerstoffbarriereschicht (3) der Unterziehfolie (2) aus Polyamid und/oder Copolyamid besteht.

9. Abdecksystem nach einem der Ansprüche 1 bis 8, **dadurch gekennzeichnet, dass** die Unterziehfolie (2) in wenigstens einer Schicht (3, 4) Additive zur Erhöhung der Stabilität gegenüber UV-Strahlung und/ oder Gleitmittel und/oder mineralische Antiblock-Additive zur Verringerung der Reibungskoeffizienten der Folienoberfläche und/oder Additive zur Einfärbung der Folie enthält.

10. Abdecksystem nach einem der Ansprüche 1 bis 9, **dadurch gekennzeichnet, dass** das Abdecksystem (1) eine Silofolie (5) aufweist, die mit der Unterziehfolie (2) eine Einheit zur Abdeckung in einem Arbeitsgang bildet, wobei die Einheit vorzugsweise dadurch gebildet wird, dass die Unterziehfolie (2) und die Silofolie (5) miteinander aufgerollt und/oder gefaltet sind zum gemeinsamen Entrollen und/oder Auffalten in einem Arbeitsgang.

11. Abdecksystem nach Anspruch 10, **dadurch gekennzeichnet, dass** die Unterziehfolie (2) von der Silofolie (5) trennbar zum Anschmiegen an die Oberfläche des Futtermittelhaufwerks (6) ist.

12. Abdecksystem nach Anspruch 10 oder 11, **dadurch gekennzeichnet, dass** die Silofolie (5) eine niedrigere Wasserdampfdurchlässigkeit als die Unterziehfolie (2) aufweist.

13. Abdecksystem nach einem der Ansprüche 10 bis 12, **dadurch gekennzeichnet, dass** die Silofolie (5) eine Wasserdampfdurchlässigkeit nach ISO 15106-3 von höchstens $3 \frac{g}{m^2 \cdot d}$, vorzugsweise höchstens $2,5 \frac{g}{m^2 \cdot d}$, insbesondere höchstens $2,0 \frac{g}{m^2 \cdot d}$ bei 23°C und 85 % relativer Feuchte aufweist.

14. Abdecksystem nach einem der Ansprüche 10 bis 13, **dadurch gekennzeichnet, dass** die Silofolie (5) zu wenigstens 70 Gew.-% aus einem oder mehreren Materialien aus der Gruppe umfassend

   - Polyethylen niederer Dichte (LDPE),
   - Polyethylen mittlerer Dichte (MDPE),
   - Polyethylen hoher Dichte (HDPE),
   - Copolymerisaten aus Ethylen und $\alpha$-Olefinen (LLDPE),
   - Copolymerisaten aus Ethylen und Vinylacetat (EVA),
   - Copolymerisaten aus Ethylen und Acrylsäure, Metacrylsäure oder deren Estern,
   - Ethylenbutylacrylat (EBA),
   - Polypropylen (PP),
   - heterophasischen (Block-Co-PP) oder homogenen (Random-CE-PP) Copolymerisaten aus Propylen und Ethylen.

15. Abdecksystem nach einem der Ansprüche 10 bis 14, **dadurch gekennzeichnet, dass** die Unterziehfolie (2) und die Silofolie (5) gemeinsam durch Coextrusion mit geringer Verbundhaftung zum Trennen der Unterziehfolie (2) von der Silofolie (5) hergestellt ist.

16. Abdecksystem nach einem der Ansprüche 10 bis 15, **dadurch gekennzeichnet, dass** zumindest eine Folie, vorzugsweise die Silofolie (5) in wenigstens einer Schicht eine Schaumstruktur zur Separation/Trennung der Silofolie (5) von der Unterziehfolie (2) aufweist.

17. Abdecksystem nach einem der Ansprüche 10 bis 16, **dadurch gekennzeichnet, dass** die Silofolie (5) eine Dicke von mindestens 50 $\mu$m, vorzugsweise mindestens 60 $\mu$m, insbesondere mindestens 70 $\mu$m und/ oder höchstens 120 $\mu$m, vorzugsweise höchstens 110 $\mu$m, insbesondere höchstens 100 $\mu$m aufweist

18. Abdecksystem nach einem der Ansprüche 1 bis 17, **dadurch gekennzeichnet, dass** die Schutzschicht (4) von der Sauerstoffbarriereschicht (3) getrennt ist.

19. Rolle mit einem Abdecksystem nach einem der Ansprüche 1 bis 18.

20. Verfahren zur Silagebereitung mit folgenden Schritten:

   - Aufbringen eines Abdecksystem (1) nach einem der Ansprüche 1 bis 18, wobei eine Unterziehfolie (2) gemeinsam mit einer Silofolie (5) in einem Arbeitsgang auf ein Futtermittelhaufwerk (6) aufgebracht wird,
   - wobei die Unterziehfolie (2) von der Silofolie (5) durch Einweichung von Feuchtigkeit aus dem Haufwerk (6) löst und sich an die Oberfläche des Futtermittelhaufwerks (6) anschmiegt.

21. Verwendung eines Abdecksystems nach einem der Ansprüche 1 bis 18 zur Abdeckung von Haufwerksilos wie Fahrsilos oder Freigärhaufen in einem Arbeitsgang.

## Claims

1. Covering system (1) for silage preparation comprising at least one underlay film (2) for closely hugging onto the surface of a fodder material (6), wherein the underlay film (2) has at least one oxygen barrier layer (3), at least 50 wt.% whereof consists of materials of the group comprising polyamide, copolyamide, polyester, copolyester, polyethylene vinyl alcohol, polyvinyl alcohol and/or mixtures thereof, **characterized in that** the underlay film (2) has at least one protective layer (4) for protection of the oxygen barrier layer (3) against substances of the silage, wherein the underlay film (2) has a thickness of at most 60 $\mu$m and the oxygen barrier layer (3) is thicker than the protective layer (4) at least by the factor 1.2.

2. Covering system according to Claim 1, **characterized in that** at least 50 wt.%, preferably at least 70 wt.%, in particular at least 90 wt.% of the protective layer (4) consists of materials from the group comprising polyethylene, polypropylene, copolymers of ethylene with other vinyl monomers and copolymers of propylene with other vinyl monomers, ethylene vinyl acetate (EVA) or ethylene butyl acrylate (EBA).

3. Covering system according to Claim 1 or 2, **characterized in that** the underlay film (2) has a thickness of at most 50 μm, in particular at most 40 μm, and/or at least 10 μm, preferably at least 15 μm, in particular at least 20 μm.

4. Covering system according to one of Claims 1 to 3, **characterized in that** the oxygen barrier layer (3) is thicker than the protective layer (4) at least by the factor 1.4, in particular at least by the factor 1.6.

5. Covering system according to one of Claims 1 to 4, **characterized in that** the underlay film (2) has an oxygen permeability according to DIN 53380-3 at 23° and 50% relative humidity of at most 500 cm$^3$/m$^2$.d.bar, preferably at most 300 cm$^3$/m$^2$.d.bar, in particular 200 cm$^3$/m$^2$.d.bar.

6. Covering system according to one of Claims 1 to 5, **characterized in that** the underlay film (2) has a water vapor permeability according to ISO 15106-3 at 23°C and 85% relative humidity of at least 5 g/m$^2$.d, preferably at least 10 g/m$^2$.d, in particular at least 15 g/m$^2$.d.

7. Covering system according to one of Claims 1 to 6, **characterized in that** the underlay film (2) of at least one layer (3) as well as materials from the group comprising polyamide, copolyamide, polyester, copolyester, polyethylene vinyl alcohol, polyvinyl alcohol and mixtures thereof contains at most 20 wt.% of further polymeric constituents, preferably at most 10 wt.%, in particular no further polymeric constituents.

8. Covering system according to one of Claims 1 to 7, **characterized in that** the oxygen barrier layer (3) of the underlay film (2) consists of polyamide and/or copolyamide.

9. Covering system according to one of Claims 1 to 8, **characterized in that** the underlay film (2) in at least one layer (3, 4) contains additives for increasing the stability against UV radiation and/or lubricants and/or mineral antiblock additives for reducing the coefficients of friction of the film surface and/or additives for coloring the film.

10. Covering system according to one of Claims 1 to 9, **characterized in that** the covering system (1) has a silo film (5) which with the underlay film (2) forms a unit for covering in one operation, wherein the unit is preferably formed **in that** the underlay film (2) and the silo film (5) are rolled up and/or folded together for combined unrolling and/or unfolding in one operation.

11. Covering system according to Claim 10, **characterized in that** the underlay film (2) is separable from the silo film (5) for closely hugging the surface of the fodder material heap (6).

12. Covering system according to one of Claims 10 or 11, **characterized in that** the silo film (5) has a lower water vapor permeability than the underlay film (2).

13. Covering system according to one of Claims 10 to 12, **characterized in that** the silo film (5) has a water vapor permeability according to ISO 15106-3 of at most 3 g/m$^2$.d, preferably at most 2.5 g/m$^2$.d, in particular at most 2.0 g/m$^2$.d, at 23°C and 85% relative humidity.

14. Covering system according to one of Claims 10 to 13, **characterized in that** at least 70 wt.% of the silo film (5) consists of one or more materials from the group comprising

    - low density polyethylene (LDPE),
    - medium density polyethylene (MDPE),
    - high density polyethylene (HDPE),
    - copolymers of ethylene and α-olefins (LLDPE),
    - copolymers of ethylene and vinyl acetate (EVA),
    - copolymers of ethylene and acrylic acid, methacrylic acid or esters thereof,
    - ethylene butyl acrylate (EBA),
    - polypropylene (PP),
    - heterophasic (block co-PP) or homogeneous (random CE-PP) copolymers of propylene and ethylene.

15. Covering system according to one of Claims 10 to 14, **characterized in that** the underlay film (2) and the silo film (5) are produced together by coextrusion with low interlayer adhesion for separation of the underlay film (2) from the silo film (5).

16. Covering system according to one of Claims 10 to 15, **characterized in that** at least one film, preferably the silo film (5) has in at least one layer a foam structure for the separation of the silo film (5) from the underlay film (2).

17. Covering system according to one of Claims 10 to 16, **characterized in that** the silo film (5) has a thickness of at least 50 μm, preferably at least 60 μm, in particular at least 70 μm and/or at most 120 μm, preferably at most 110 μm, in particular at most 100 μm.

18. Covering system according to one of Claims 1 to 17, **characterized in that** the protective layer (4) is separated from the oxygen barrier layer (3).

**19.** Roll with a covering system according to one of Claims 1 to 18.

**20.** Method for silage preparation with the following steps:

- application of a covering system (1) according to one of Claims 1 to 18, wherein an underlay film (2) together with a silo film (5) is applied in one operation onto a fodder material heap (6),
- wherein the underlay film (2) detaches from the silo film (5) through soaking of moisture from the heap (6) and closely hugs the surface of the fodder material heap (6).

**21.** Use of a covering system according to one of Claims 1 to 18 for covering heap silos such as clamps or open fermentation heaps in one operation.

## Revendications

**1.** Système de recouvrement (1) pour une préparation d'ensilage, comprenant au moins un film inférieur (2) destiné à se conformer à la surface d'un aliment pour animaux (6), le film inférieur (2) comprenant au moins une couche de barrière à l'oxygène (3), qui est constituée à hauteur d'au moins 50 % en poids par des matériaux du groupe comprenant le polyamide, le copolyamide, le polyester, le copolyester, le polyéthylène-alcool vinylique, l'alcool polyvinylique et/ou leurs mélanges, **caractérisé en ce que** le film inférieur (2) comprend au moins une couche de protection intérieure (4) orientée vers l'ensilage, destinée à protéger la couche de barrière à l'oxygène (3) contre des substances de l'ensilage, le film inférieur (2) présentant une épaisseur d'au plus 60 $\mu$m et la couche de barrière à l'oxygène (3) étant au moins 1,2 fois plus épaisse que la couche de protection (4).

**2.** Système de recouvrement selon la revendication 1, **caractérisé en ce que** la couche de protection (4) est constituée à hauteur d'au moins 50 % en poids, de préférence à hauteur d'au moins 70 % en poids, notamment à hauteur d'au moins 90 % en poids, par des matériaux du groupe comprenant le polyéthylène, le polypropylène, les copolymères d'éthylène avec d'autres monomères de vinyle, ainsi que les copolymères de propylène avec d'autres monomères de vinyle, l'éthylène-acétate de vinyle (EVA) ou l'éthylène-acrylate de butyle (EBA).

**3.** Système de recouvrement selon la revendication 1 ou 2, **caractérisé en ce que** le film inférieur (2) présente une épaisseur d'au plus 50 $\mu$m, notamment d'au plus 40 $\mu$m et/ou d'au moins 10 $\mu$m, de préférence d'au moins 15 $\mu$m, notamment d'au moins 20 $\mu$m.

**4.** Système de recouvrement selon l'une quelconque des revendications 1 à 3, **caractérisé en ce que** la couche de barrière à l'oxygène (3) est au moins 1,4 fois, notamment au moins 1,6 fois, plus épaisse que la couche de protection (4).

**5.** Système de recouvrement selon l'une quelconque des revendications 1 à 4, **caractérisé en ce que** le film inférieur (2) présente une perméabilité à l'oxygène selon DIN 53380-3 à 23 °C et 50 % d'humidité relative d'au plus 500 cm$^3$/m$^2$.d.bar, de préférence d'au plus 300 cm$^3$/m$^2$.d.bar, notament de 200 cm$^3$/m$^2$.d.bar.

**6.** Système de recouvrement selon l'une quelconque des revendications 1 à 5, **caractérisé en ce que** le film inférieur (2) présente une perméabilité à la vapeur d'eau selon ISO 15106-3 à 23 °C et 85 % d'humidité relative d'au moins 5 g/m$^2$.d, de préférence d'au moins 10 g/m$^2$.d, notamment d'au moins 15 g/m$^2$.d.

**7.** Système de recouvrement selon l'une quelconque des revendications 1 à 6, **caractérisé en ce que** le film inférieur (2) comprend au moins une couche (3) qui contient, en plus des matériaux du groupe comprenant le polyamide, le copolyamide, le polyester, le copolyester, le polyéthylène-alcool vinylique, l'alcool polyvinylique et leurs mélanges, au plus 20 % en poids de constituants polymères supplémentaires, de préférence au plus 10 % en poids, notamment aucun constituant polymère supplémentaire.

**8.** Système de recouvrement selon l'une quelconque des revendications 1 à 7, **caractérisé en ce que** la couche de barrière à l'oxygène (3) du film inférieur (2) est constituée par du polyamide et/ou du copolyamide.

**9.** Système de recouvrement selon l'une quelconque des revendications 1 à 8, **caractérisé en ce que** le film inférieur (2) contient dans au moins une couche (3, 4) des additifs destinés à augmenter la stabilité contre le rayonnement UV et/ou des lubrifiants et/ou des additifs antiblocage minéraux destinés à réduire les coefficients de frottement de la surface du film et/ou des additifs destinés à colorer le film.

**10.** Système de recouvrement selon l'une quelconque des revendications 1 à 9, **caractérisé en ce que** le système de recouvrement (1) comprend un film d'ensilage (5), qui forme avec le film inférieur (2) une unité destinée au recouvrement en une étape de travail, l'unité étant de préférence formée de telle sorte que le film inférieur (2) et le film d'ensilage (5) soient enroulés et/ou pliés l'un avec l'autre pour le déroulement et/ou le dépliage conjoint en une étape de travail.

11. Système de recouvrement selon la revendication 10, **caractérisé en ce que** le film inférieur (2) est séparable du film d'ensilage (5) pour se conformer à la surface de la pile d'aliment pour animaux (6).

12. Système de recouvrement selon la revendication 10 ou 11, **caractérisé en ce que** le film d'ensilage (5) présente une perméabilité à la vapeur d'eau plus faible que le film inférieur (2).

13. Système de recouvrement selon l'une quelconque des revendications 10 à 12, **caractérisé en ce que** le film d'ensilage (5) présente une perméabilité à la vapeur d'eau selon ISO 15106-3 d'au plus 3 g/m$^2$.d, de préférence d'au plus 2,5 g/m$^2$.d, notamment d'au plus 2,0 g/m$^2$.d, à 23 °C et 85 % d'humidité relative.

14. Système de recouvrement selon l'une quelconque des revendications 10 à 13, **caractérisé en ce que** le film d'ensilage (5) est constitué à hauteur d'au moins 70 % en poids par un ou plusieurs matériaux du groupe comprenant :

> - le polyéthylène basse densité (LDPE),
> - le polyéthylène moyenne densité (MDPE),
> - le polyéthylène haute densité (HDPE),
> - les copolymères d'éthylène et d'a-oléfines (LLDPE),
> - les copolymères d'éthylène et d'acétate de vinyle (EVA),
> - les copolymères d'éthylène et d'acide acrylique, d'acide méthacrylique ou leurs esters,
> - l'éthylène-acrylate de butyle (EBA),
> - le polypropylène (PP),
> - les copolymères hétérophasés (co-PP séquencé) ou homogènes (CE-PP aléatoire) de propylène et d'éthylène.

15. Système de recouvrement selon l'une quelconque des revendications 10 à 14, **caractérisé en ce que** le film inférieur (2) et le film d'ensilage (5) sont fabriqués conjointement par coextrusion avec une faible adhérence du composite pour la séparation du film inférieur (2) du film d'ensilage (5).

16. Système de recouvrement selon l'une quelconque des revendications 10 à 15, **caractérisé en ce qu'**au moins un film, de préférence le film d'ensilage (5), présente dans au moins une couche une structure en mousse pour la séparation du film d'ensilage (5) du film inférieur (2) .

17. Système de recouvrement selon l'une quelconque des revendications 10 à 16, **caractérisé en ce que** le film d'ensilage (5) présente une épaisseur d'au

moins 50 $\mu$m, de préférence d'au moins 60 $\mu$m, notamment d'au moins 70 $\mu$m, et/ou d'au plus 120 $\mu$m, de préférence d'au plus 110 $\mu$m, notamment d'au plus 100 $\mu$m.

18. Système de recouvrement selon l'une quelconque des revendications 1 à 17, **caractérisé en ce que** la couche de protection (4) est séparée de la couche de barrière à l'oxygène (3).

19. Rouleau comprenant un système de recouvrement selon l'une quelconque des revendications 1 à 18.

20. Procédé de conditionnement d'ensilage, comprenant les étapes suivantes :

> - l'application d'un système de recouvrement (1) selon l'une quelconque des revendications 1 à 18, un film inférieur (2) étant appliqué conjointement avec un film d'ensilage (5) en une étape de travail sur une pile d'aliment pour animaux (6),
> - le film inférieur (2) étant détaché du film d'ensilage (5) par ramollissement par l'humidité de la pile (6) et se conformant à la surface de la pile d'aliment pour animaux (6).

21. Utilisation d'un système de recouvrement selon l'une quelconque des revendications 1 à 18 pour le recouvrement de silos tels que des silos tranchés ou des piles à fermentation libre en une étape de travail.

Fig.1

Fig. 2

EP 3 519 194 B1

Fig. 3

EP 3 519 194 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1035762 B1
- EP 2286658 B1
- DE 1020090252948 B4
- EP 3009263 A1